# FASCICULE DE BREVET EUROPEEN

(11) **EP 0 475 815 B1**
(45) Date de publication et mention de la délivrance du brevet: **01.02.1995**
(21) Numéro de dépôt: 91402343.7
(22) Date de dépôt: 02.09.1991
(51) Int. Cl.: H02G 1/08, G02B 6/44

(54) **Procédé pour la pose en conduite de grande longueur d'un câble de télécommunication, et dispositif pour la mise en oeuvre de ce procédé**
Verfahren zum Einziehen einer grossen Fernmeldekabellänge in ein Rohr und Vorrichtung zur Durchführung dieses Verfahrens
Process for laying a large length of telecommunications cable into a conduit, and device for carrying out this process

(30) Priorité: 05.09.1990 FR 9011033
(43) Date de publication de la demande: 18.03.1992
(73) Titulaire: FRANCE TELECOM, 75015 Paris (FR)
(72) Inventeur: Pecot, Alain, F-22300 Lannion (FR); Petit, Alain, F-22300 Lannion (FR); Beaumanoir, Yvon, F-22300 Lannion (FR)
(74) Mandataire: Armengaud Ainé, Alain

(56) Documents cités:
- EP-A- 0 292 037
- EP-A- 0 345 043
- DE-A- 3 220 286
- FR-A- 2 655 782

## Description

La présente invention est relative à un procédé pour la pose en conduite de grande longueur d'un câble de télécommunication, notamment mais non exclusivement du genre câble à fibres optiques.

On connaît les difficultés que présente la mise en place de tels câbles dans une conduite étroite et dont la longueur peut être très importante, en particulier dépasser plusieurs milliers de mètres. Certaines solutions classiques consistent ainsi à lier la tête du câble à un filin ou analogue, dont l'autre extrémité est réunie à un furet ou organe d'obturation équivalent, susceptible de se déplacer dans la conduite en laissant entre sa périphérie et la surface interne de cette conduite un jeu minimal, le furet formant ainsi une sorte de piston ou de bouchon mobile susceptible d'être soufflé dans la conduite d'une extrémité à l'autre de celle-ci sous l'effet d'une pression convenable d'air comprimé introduit par une extrémité, en permettant d'exercer sur le câble un effort de traction suffisant pour le tirer dans la conduite au fur et à mesure du déplacement du furet.

Mais ce procédé, tel que par exemple envisagé dans la demande de brevet européen EP-A-0 292 037, est rapidement limité du fait des forces de frottement du câble glissant dans la conduite en suivant le furet, qui nécessitent de disposer, de place en place, le long de cette conduite, des chambres intermédiaires délimitant selon la longueur de la conduite des sections séparées mais successives, le câble ainsi tiré débouchant dans une telle chambre avant que le filin de traction ne soit propulsé de celle-ci vers la suivante et ainsi de suite selon le même processus, en tirant le câble d'une chambre à l'autre, dans lesquelles est successivement introduite la pression d'air comprimé, nécessaire au déplacement du furet (voir également le document EP-A-0 345 043).

Un tel procédé n'est pas pratique à mettre en oeuvre ; en outre, il exige de réaliser, sur des distances relativement courtes, des chambres intermédiaires, ce qui grève considérablement le coût de l'installation.

La présente invention est relative à un procédé et une installation qui pallient ces inconvénients.

A cet effet, le procédé considéré, qui consiste à munir la tête de câble d'un furet dont les dimensions transversales sont sensiblement égales, au jeu de glissement près, au diamètre interne de la conduite, à exercer sur le furet, depuis l'extrémité de la conduite par laquelle pénètre la tête de câble, une pression d'air comprimé provoquant sur le furet un effort de traction dans des sections successives de la conduite, et à prévoir,de part et d'autre de l'extrémité de chaque section, des canalisations de raccordement, munies de vannes d'obturation destinées à introduire séquentiellement dans la conduite une pression d'air comprimé, exerçant une pression sur le furet pour la traction du câble dans les sections successives de la conduite, situées dans le prolongement les unes des autres, se caractérise en ce qu'il consiste également à disposer entre les deux canalisations de raccordement, à la jonction des sections successives, un mécanisme d'obturation temporaire de la conduite, librement traversé par le câble guidé de manière sensiblement étanche dans ce mécanisme, celui-ci étant apte à s'ouvrir pour le passage du furet puis à se refermer en entourant alors le câble avec un jeu minimal, et enfin à commander l'ouverture et la fermeture des vannes, prévues sur les canalisations de raccordement, de façon à réaliser la traction du câble dans les sections successives, sans que, au cours de son déplacement, se produise entre le câble et la conduite un frottement prohibitif.

Le procédé selon l'invention permet ainsi de déplacer le câble à travers toute la longueur de la conduite dans les sections successives de cette dernière, formées entre les chambres intermédiaires, les mécanismes d'obturation de celles-ci étant successivement commandés pour le passage du furet, en délimitant de l'une à l'autre, au fur et à mesure du déplacement du câble, des compartiments sensiblement étanches alimentés par les canalisations de raccordement, respectivement en amont et en aval de chaque section, ces canalisations étant selon le cas et en fonction de la position du furet obturées ou au contraire ouvertes à l'air libre, ou encore réunies à une source d'air comprimé sous pression.

Ainsi et dans la première section de la conduite, on prévoit de façon en elle-même connue, à son extrémité par laquelle pénètre la tête du câble, un pistolet d'injection, fermant de façon étanche l'extrémité de la conduite, tout en permettant le passage du câble se déroulant à partir d'un touret ou organe de stockage analogue et pénétrant progressivement dans la conduite sous l'effet de la traction créée par le furet, solidarisé ou lié à la tête du câble et sur lequel s'exerce une pression d'air comprimé appropriée, introduite dans la première section à travers ce pistolet. A l'extrémité opposée de cette première section, est prévu un premier mécanisme d'obturation temporaire et, de part et d'autre de celui-ci, des canalisations de raccordement, respectivement en amont et en aval du mécanisme, ces canalisations étant munies de vannes d'obturation, permettant, selon le cas, de les fermer ou de les ouvrir, soit pour les mettre à l'air libre, soit pour les réunir à une source d'air comprimé, du genre compresseur ou autre.

Dans un premier temps, la vanne prévue sur la canalisation située en amont du mécanisme d'obturation monté à l'extrémité de la première section de la conduite est fermée, de telle sorte que la pression d'air qui s'exerce sur le furet, assure l'entraînement du câble jusqu'à ce que ce furet vienne au contact du mécanisme d'obturation. Sous la poussée du furet, le mécanisme s'ouvre et laisse passer ce dernier, en même temps que la vanne prévue sur la canalisation de raccordement située en amont est alors ouverte et que la vanne située sur la canalisation en aval est raccordée à une source d'air comprimé sous pression. Celle-ci, à son tour, exerce sur le furet une poussée analogue à la précédente mais dans la seconde section de la conduite. La canalisation de raccordement prévue en aval sur cette seconde section est alors fermée, jusqu'à ce que le furet atteigne le mécanisme d'obturation monté entre la seconde et la troisième section, puis est ouverte une fois le franchissement de ce mécanisme, et ainsi de suite d'une section à la suivante, jusqu'à l'extrémité de la conduite. Lorsque le câble est entièrement mis en place, toutes les vannes des canalisations de raccordement successives sont ainsi ouvertes, le déplacement du câble étant de préférence poursuivi au-delà de la dernière section sur une longueur complémentaire suffisante, afin de permettre de réaliser les jonctions nécessaires avec un autre câble, par exemple.

L'invention concerne également un dispositif pour la mise en oeuvre de ce procédé, caractérisé en ce qu'il comporte, selon la longueur du câble, aux extrémités de chaque section de la conduite, des canalisations de raccordement munies chacune d'une vanne de fermeture et, entre deux sections successives, un mécanisme d'obturation traversé par le câble, réalisant une étanchéité relative des diverses sections, tout en autorisant le passage du câble et du furet de traction.

Avantageusement et selon une caractéristique particulière de l'invention, chaque mécanisme d'obturation est constitué de deux demi-coquilles, hémi-cylindriques, présentant chacune un passage axial dont le diamètre, une fois les deux coquilles juxtaposées, correspond sensiblement au diamètre du câble, ces coquilles étant soumises à l'effort de deux ressorts transversaux antagonistes, rappelant en permanence les coquilles au contact du câble, tout en leur permettant de s'écarter l'une de l'autre lors du passage du furet.

D'autres particularités d'un procédé de pose en conduite de grandeur longueur d'un câble de télécommunication et d'un dispositif pour la mise en oeuvre de ce procédé, apparaîtront encore à travers la description qui suit d'un exemple de réalisation, donné à titre indicatif et non limitatif, en référence aux dessins annexés sur lesquels :
- Les Figures 1 et 2 sont des vues schématiques en coupe longitudinale d'une conduite comportant plusieurs sections successives et des moyens pour permettre la mise en place d'un câble dans ces dernières.
- Les Figures 3, 4 et 5 illustrent également schématiquement, à plus grande échelle, un mécanisme d'obturation monté entre deux sections successives de la conduite, munies chacune de canalisations de raccordement et de vannes d'ouverture et de fermeture de ces canalisations, permettant d'expliciter le fonctionnnement de ce mécanisme pour la mise en oeuvre du procédé.

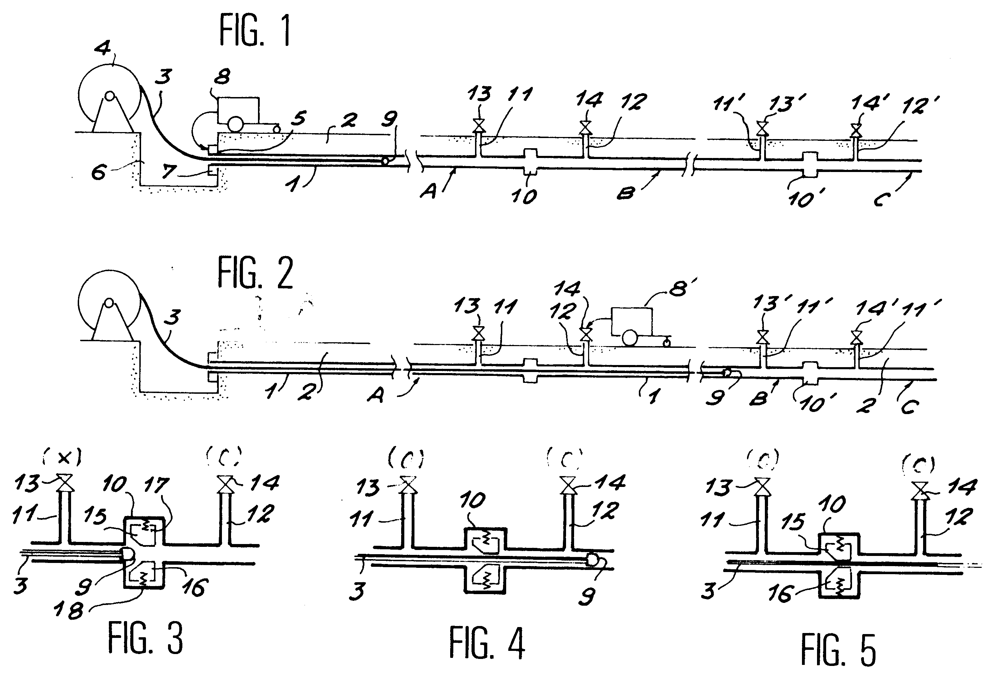

Sur les Figures 1 et 2, la référence 1 désigne une conduite supposée de grande longueur, pouvant notamment excéder plusieurs milliers de mètres, cette conduite étant enterrée dans le sol 2 à une profondeur appropriée. Elle est destinée à recevoir un câble 3, notamment du genre câble de télécommunication, en particulier à fibres optiques ou analogue, déroulé à partir d'un touret 4 et pénétrant à une extrémité ouverte 5 de la conduite, débouchant dans une chambre de mise en place 6, creusée dans le sol. L'extrémité 5 est munie d'un pistolet d'injection 7, dont le profil importe peu à l'invention, celui-ci pouvant être en particulier réalisé conformément aux dispositions décrites et revendiquées dans la demande de brevet 89.16404 du 12 Décembre 1989, au nom d'une partie des présents Demandeurs. Le pistolet 7 est raccordé à un compresseur ou engin équivalent 8, susceptible de fournir à l'intérieur de la conduite 1 une pression d'air comprimé suffisante pour exercer sur un furet 9 ou autre organe d'obturation du même genre, prévu à l'extrémité du câble 3 qui pénètre dans la conduite, un effort de traction approprié, apte à entraîner ce câble à partir de son extrémité ouverte 5.

On conçoit cependant que, si la conduite 1 présente une grande longueur, en raison des frottements du câble et du furet contre la paroi interne de cette conduite, l'effort créé par la pression d'air comprimé soit rapidement insuffisant et ne permette pas de tirer le câble au-delà d'une certaine distance de l'extrémité 5.

A cet effet et conformément à l'invention, on subdivise la conduite 1 en une série de sections successives, schématiquement désignées sur les Figures 1 et 2, sous les références A, B, C ..., ces sections étant disposées dans le prolongement l'une de l'autre selon la longueur totale de la conduite. En outre, entre deux sections successives, le câble se raccorde par une cavité intermédiaire à l'intérieur de laquelle est monté à chaque fois un mécanisme d'obturation temporaire 10 dont le détail est décrit plus loin. De plus, de chaque côté de ce mécanisme d'obturation, entre deux sections successives dans la conduite, celle-ci est reliée à deux canalisations de raccordement 11 et 12, respectivement en amont et en aval, chacune de ces canalisations comportant une vanne d'obturation 13, 14, permettant selon le cas d'ouvrir ou de fermer les canalisations en question, selon un processus particulier précisé ci-après. Notamment et comme on le voit sur la Figure 2, le compresseur 8 peut être à la demande réuni à la vanne 14 prévue à l'extrémité amont de chacune des sections B, C, ... de la conduite au-delà de la première A, pour assurer de proche en proche le déplacement du furet 9 dans la section correspondante et permettre de l'une à l'autre le tirage du câble 3. Sur les figures, les canalisations de raccordement 11 et 12 désignent celles situées de part et d'autre du premier mécanisme d'obturation 10 en bout de la première section A, à la liaison avec la seconde section B. Entre les sections B et C, le mécanisme d'obturation est désigné sous la référence 10′, les canalisations de raccordement et leurs vannes d'ouverture ou de fermeture étant respectivement repérées par les références 11′ et 12′ d'une part, 13′ et 14′ d'autre part et ainsi de suite sur toute la longueur de la conduite.

Les Figures 3 à 5 permettent à plus grande échelle d'expliciter le fonctionnement du dispositif proposé pour la mise en oeuvre du procédé selon l'invention. En outre, elles permettent de suggérer la structure d'un des mécanismes d'obturation 10, dont le détail peut être conforme aux dispositions illustrées dans le document FR-A- 2 655 782 publié le 14.06.91.

Ainsi, chaque mécanisme se compose principalement de deux demi-coquilles, hémi-cylindriques, respectivement 15 et 16, associées chacune à un ressort 17,18 exerçant sur ces coquilles un effort antagoniste de manière à les rapprocher l'une de l'autre en contact mutuel, ces coquilles étant munies chacune d'un passage central à travers lequel, lorsque les coquilles sont rapprochées, le câble peut passer librement en étant néanmoins guidé dans celles-ci, tout en laissant un jeu minimal et par suite une fuite d'air comprimé aussi réduite que possible à travers ce jeu, au fur et à mesure que se déplace le câble. En revanche, lorsque le furet 9, dont le diamètre externe correspond sensiblement au diamètre interne de la conduite 1, se présente devant un des mécanismes d'obturation 10, en étant poussé contre celui-ci par la pression d'air comprimé, les deux coquilles 15 et 16 peuvent s'écarter en comprimant leurs ressorts 17 et 18 en laissant alors passer le furet, ces coquilles reprenant immédiatement ensuite leur position rapprochée au plus près du câble qui les traverse.

Sur les dessins, les vannes 13 et 14 sont figurées en étant associées à un repère, respectivement (x) ou (o) selon qu'elles sont fermées ou ouvertes ou fur et à mesure du déplacement du câble.

Le procédé de mise en place du câble selon l'invention se déroule de la façon suivante. Dans un premier temps, le câble 3 muni de son furet 9 fixé à son extrémité libre est introduit dans la conduite 1 par le pistolet 7, lui-même raccordé au compresseur 8, fournissant derrière le furet 9 une pression d'air comprimé suffisante pour tirer progressivement le câble dans la première section A de la conduite. Dans ce cas, et comme illustré sur la Figure 3, la vanne 13 prévue sur la canalisation de raccordement 11 à l'extrémité de cette section est fermée, les vannes des autres canalisations en aval étant ouvertes.

Lorsque le furet 9 se présente au droit du mécanisme d'obturation 10 en bout de la section A, il écarte les deux demi-coquilles 15 et 16 de celui-ci et franchit ce mécanisme sur une distance suffisante pour que le furet se trouve placé au-delà de la canalisation 12, le passage du furet à cet endroit étant détecté par le flux d'air débouchant à ce moment par la vanne 14 précédemment ouverte. A cet instant, un compresseur 8′, analogue au compresseur 8 réuni au pistolet 7, est amené au niveau de la canalisation 12 de manière à se raccorder sur celle-ci à sa vanne 14, pour produire dans la conduite une pression d'air similaire à celle créée par le premier compresseur.

La vanne 13 est alors ouverte, en même temps que la pression d'air fournie par le compresseur 8′ est introduite dans la seconde section B par la canalisation 12. Cette pression d'air exerce à son tour un effort suffisant sur le furet 9 et déplace ce dernier avec le câble 1 sur toute la longueur de cette section, la vanne 13′ en aval de celle-ci étant alors fermée et la vanne 14′ ouverte, comme l'étaient les vannes 13 et 14 dans la première phase décrite ci-dessus. Au cours de ce déplacement, les coquilles 15 et 16 du mécanisme 10 restent en contact l'une avec l'autre et séparent de façon sensiblement étanche les sections A et B tout en laissant le câble se déplacer librement, en étant seulement convenablement guidé et centré dans la conduite à la traversée de ces coquilles (Figure 5).

La même opération se reproduit alors de proche en proche d'une section à la suivante sur toute la longueur de la conduite, l'ouverture des vannes d'obturation au fur et à mesure du passage du furet d'un mécanisme à l'autre, évitant que ne se produisent sur le câble en mouvement des efforts de frottement prohibitifs, la résistance au déplacement du câble dans chaque section déjà franchie étant pratiquement nulle, notamment lorsque l'on maintient dans celle-ci le débit d'air ayant au préalable assuré le déplacement du furet.

Avantageusement, dans la dernière section de la conduite (non représentée sur les dessins), le déplacement du câble est réalisé sur une surlongueur convenable, par exemple en allongeant la conduite avec un tube de longueur correspondante, qui peut être ensuite déconnecté en laissant libre la surlongueur ainsi tirée, cette dernière pouvant être utilisée pour effectuer les épissures de raccordement éventuellement nécessaires en bout du câble.

On réalise ainsi une installation de tirage de câble de conception simple, dans laquelle ce câble peut être déplacé sur une très grande longueur au moyen de soufflages successifs dans des sections élémentaires consécutives, la tête du câble étant munie d'un furet et chaque section équipée d'un mécanisme d'obturation temporaire tel que se relaient les efforts exercés sur ce furet par la pression d'air comprimé créée à l'aide d'un compresseur déplacé d'une section à l'autre. De façon pratique, on constate qu'avec un compresseur délivrant un débit d'environ 10 m3/min sous une pression de 14 bars, on peut poser avec le procédé de l'invention un câble dans des sections élémentaires de l'ordre de 1.200 mètres, la conduite étant de préférence réalisée en un matériau du genre polyéthylène haute densité. Dans l'hypothèse où la mise en place du câble s'effectue, de façon connue, en procédant simultanément à une lubrification de celui-ci, chaque section de conduite peut atteindre 2.400 mètres.

Ainsi, il est clair que les mécanismes d'obturation intermédiaires peuvent être répartis selon la longueur du câble de telle sorte que les sections ainsi délimitées ne soient pas nécessairement de même longueur, la position de ces mécanismes pouvant varier en fonction des caractéristiques du câble, de la conduite ou du tracé de cette dernière, voire de celles du flux d'air créé. Le procédé proposé présente l'avantage de ne nécessiter que très peu de travaux ou d'ouvrages de génie civil, notamment du genre fouille ouverte ou chambre de tirage, donnant un accès direct à la conduite, les seuls raccordements nécessaires étant ceux imposés par le montage des mécanismes d'obturation et des canalisations de raccordement de part et d'autre de ces derniers. La seule limitation concernant la mise en oeuvre du procédé résulte donc du diamètre et de l'encombrement du câble et du nombre des compresseurs à mettre en oeuvre en fonction du pas de régénération du flux d'air.

## Revendications

1. Procédé pour la pose en conduite (1) de grande longueur d'un câble de télécommunication (3), qui consiste à munir la tête de câble d'un furet (9) dont les dimensions transversales sont sensiblement égales, au jeu de glissement près, au diamètre interne de la conduite, à exercer sur le furet, depuis l'extrémité de la conduite par laquelle pénètre la tête de câble, une pression d'air comprimé provoquant sur le furet un effort de traction dans des sections successives (A, B, C ...) de la conduite, et à prévoir, de part et d'autre de l'extrémité de chaque section, des canalisations de raccordement (11,12), munies de vannes d'obturation (13,14) destinées à introduire séquentiellement dans la conduite une pression d'air comprimé, exerçant une pression sur le furet pour la traction du câble dans les sections successives de la conduite, situées dans le prolongement les unes des autres, caractérisé en ce qu'il consiste également à disposer entre les deux canalisations de raccordement, à la jonction des sections successives, un mécanisme d'obturation temporaire (10) de la conduite, librement traversé par le câble (3) guidé de manière sensiblement étanche dans ce mécanisme, celui-ci étant apte à s'ouvrir pour le passage du furet puis à se refermer en entourant alors le câble avec un jeu minimal, et enfin à commander l'ouverture et la fermeture des vannes, prévues sur les canalisations de raccordement, de façon à réaliser la traction du câble dans les sections successives, sans que, au cours de son déplacement, se produise entre le câble et la conduite un frottement prohibitif.

2. Procédé selon la revendication 1, caractérisé en ce que, dans un premier temps, la vanne (13) prévue sur la canalisation (11) située en amont du mécanisme d'obturation (10) monté à l'extrémité d'une première section (A) de la conduite est fermée, de telle sorte que la pression d'air qui s'exerce sur le furet (9), assure l'entraînement du câble jusqu'à ce que ce furet vienne au contact dudit mécanisme d'obturation.

3. Procédé selon la revendication 2, caractérisé en ce que, après que, sous la poussée du furet (9), ait été ouvert puis refermé le mécanisme d'obturation (10) monté sur la première section (A), la vanne d'obturation (14) située sur la canalisation (12) disposée en aval de ce mécanisme est raccordée à une source d'air comprimé sous pression, exerçant sur le furet une poussée analogue à la précédente mais dans la section suivante (B) de la conduite.

4. Procédé selon la revendication 3, caractérisé en ce que, après raccordement de la canalisation (12) à la source d'air comprimé, la vanne (13) montée sur la canalisation (11) située en amont du mécanisme d'obturation (10) est ouverte.

5. Procédé selon l'une quelconque des revendications 1 à 4, caractérisé en ce que la conduite comporte n sections (A, B, C, D ...) successives, parcourues l'une après l'autre par le furet de manière à déplacer le câble en séquence d'une section à la suivante.

6. Dispositif pour la mise en oeuvre du procédé selon l'une quelconque des revendications 1 à 5, caractérisé en ce qu'il comporte, selon la longueur du câble (3), aux extrémités de chaque section (A, B, C...) de la conduite, des canalisations de raccordement (11,12) munies chacune d'une vanne de fermeture (13, 14) et, entre deux sections successives, un mécanisme d'obturation (10) traversé par le câble, réalisant une étanchéité relative des diverses sections, tout en autorisant le passage du câble et du furet (9) de traction.

7. Dispositif selon la revendication 6, caractérisé en ce que, chaque mécanisme d'obturation (10) est constitué de deux demi-coquilles (15,16), hémi-cylindriques, présentant chacune un passage axial dont le diamètre, une fois les deux coquilles juxtaposées, correspond sensiblement au diamètre du câble (3), ces coquilles étant soumises à l'effort de deux ressorts transversaux antagonistes (17, 18), rappelant en permanence les coquilles au contact du câble, tout en leur permettant de s'écarter l'une de l'autre lors du passage du furet.

## Claims

1. Method of laying long lengths of telecommunication cable (3) in conduits (1) consisting in providing the head of the cable with a blocking member (9), the cross-sectional dimensions of which are essentially equal to the inside diameter of the conduit, while allowing sliding clearance, in applying pressure from compressed air onto the blocking member from the end of the conduit, through which the head of the cable enters, applying a tensile force onto the blocking member in consecutive sections (A, B, C..) of the conduit, and in providing on both ends of each section connecting ducts (11, 12) equipped with stop valves (13, 14) to sequentially supply compressed air into the conduit in order to apply pressure to the blocking member so that it pulls the cable into consecutive sections of the conduit located in each extension, characterised in that it also consists in providing between the two connecting ducts at the junction of consecutive sections a temporary blocking mechanism (10) for the conduit with the cable (3) passing freely through it and guided essentially tightly in this mechanism, the latter being able to open for passage of the blocking member and then close once again to enclose the cable with minimum clearance, and in controlling the opening and closure of the valves provided for the connecting ducts to allow the cable to be pulled into consecutive sections without any restrictive friction being produced between the cable and the conduit during displacement of the cable.

2. Method according to Claim 1, characterised in that the valve (13) provided in the duct (11) located upstream of the blocking mechanism (10) installed at the end of a first section (A) of the conduit is firstly closed so that the air pressure applied to the blocking member (9) causes the cable to be entrained until this blocking member comes into contact with the blocking mechanism.

3. Method according to Claim 2, characterised in that after the blocking mechanism (10) installed on the first section (A) has been opened and then closed under the force of the blocking member (9), the stop valve (14) located in the duct (12) disposed downstream of this mechanism is connected to a source of compressed air under pressure, which applies a similar force onto the blocking member to the former but applied in the following section (B) of the conduit.

4. Method according to Claim 3, characterised in that after the duct (12) is connected to the source of compressed air, the valve (13) installed in the duct (11) located upstream of the blocking mechanism (10) is opened.

5. Method according to any one of Claims 1 to 4, characterised in that the duct comprises n consecutive sections (A, B, C, D...), through which the blocking member passes consecutively in order to displace the cable in sequence from one section to the following section.

6. Device for implementing the method according to any one of Claims 1 to 5, characterised in that it comprises connecting ducts (11, 12) at the ends of each section (A, B, C...) of the conduit which correspond to the length of the cable (3) and are each equipped with a stop valve (13, 14) and a blocking mechanism (10), which is disposed between two consecutive sections and through which the cable passes to form a seal with the various sections while allowing the cable and the blocking member (9) pulling it to pass through.

7. Device according to Claim 6, characterised in that each blocking mechanism (10) is composed of two semi-cylindrical half shells (15, 16), each having an axial passage with a diameter corresponding essentially to the diameter of the cable (3) when the two half shells adjoin, said shells being subjected to the action of two transverse counter-springs (17, 18) to permanently keep the shells in contact with the cable while allowing them to separate from one another when the blocking member passes through.

## Patentansprüche

1. Verfahren zum Einziehen einer großen Länge eines Fernmeldekabels (3), in ein Rohr (1), das darin besteht, den Kabelkopf mit einem Molch (9) zu versehen, dessen Querabmessungen im wesentlichen bis auf ein Gleitspiel gleich dem Innendurchmesser des Rohres sind, von einem Ende des Rohres, durch das der Kabelkopf eindringt, einen Luftdruck auf den Molch auszuüben, der an dem Molch eine Zugkraft in aufeinanderfolgenden Abschnitten (A, B, C ...) des Rohrs hervorruft, und beiderseits des Endes jedes Abschnitts Anschlußleitungen (11, 12) vorzusehen, die mit Verschlußschiebern (13, 14) versehen sind, die dazu bestimmt sind, sequentiell einen Luftdruck in das Rohr einzubringen, der einen Druck auf den Molch ausübt, um das Kabel in die aufeinanderfolgenden Abschnitte des Rohres zu ziehen, die jeweils in der Verlängerung des vorhergehenden liegen, dadurch gekennzeichnet, daß es auch darin besteht, zwischen den beiden Anschlußleitungen an der Verbindungsstelle der aufeinanderfoglenden Abschnitte einen Mechanismus (10) zum zeitweiligen Verschließen des Rohrs anzuordnen, der frei von dem geführten Kabel (3) im wesentlichen dicht in diesem Mechanismus durchsetzt wird, wobei dieser dazu geeignet ist, sich für den Durchgang des Molches zu öffnen und sich dann wieder zu schließen, wobei dann das Kabel mit einem minimalen Spiel umgeben wird, und schließlich das Öffnen und Schließen der an den Anschlußleitungen vorgesehenen Schieber so zu steuern, daß das Kabel in die aufeinanderfolgenden Abschnitte gezogen wird, ohne daß im Verlauf seiner Verschiebung zwischen dem Kabel und dem Rohr eine hinderliche Reibung entsteht.

2. Verfahren nach Anspruch 1, dadurch gekennzeichnet, daß bei einem ersten Takt der an der Leitung (11) oberhalb des Verschlußmechanismus (10) vorgesehene Schieber, der am Ende des ersten Abschnitts (A) des Rohrs gelagert ist, geschlossen ist, so daß der auf den Molch (9) ausgeübte Luftdruck den Vortrieb des Kabels gewährleistet, bis dieser Molch mit dem Verschlußmechanismus in Kontakt gelangt.

3. Verfahren nach Anspruch 2, dadurch gekennzeichnet, daß nach dem Öffnen und dann Wiederverschließen des an dem ersten Abschnitt (A) angebrachten Verschlußmechanismus (10) unter der Schubkraft des Molches (9) der an der Leitung (12) unterhalb dieses Mechanismus gelegene Verschlußschieber (14) an eine Luftdruckquelle angeschlossen wird, die auf den Molch eine Schubkraft ausübt, die analog zu der vorhergehenden ist, allerdings in dem folgenden Abschnitt (B) des Rohrs.

4. Verfahren nach Anspruch 3, dadurch gekennzeichnet, daß nach dem Anschluß der Leitung (12) an die Druckluftquelle der an der Leitung (11) oberhalb des Verschlußmechanismus (10) angebrachte Schieber (13) geöffnet wird.

5. Verfahren nach einem der Ansprüche 1 bis 4, dadurch gekennzeichnet, daß das Rohr n aufeinanderfolgende Abschnitte (A, B, C, D ...) aufweist, die nacheinander von dem Molch so durchlaufen werden, daß das Kabel in Folge von einem Abschnitt zum folgenden verschoben wird.

6. Vorrichtung zur Durchführung des Verfahrens nach einem der Ansprüche 1 bis 5, dadurch gekennzeichnet, daß sie entlang der Länge des Kabels (3) an den Enden jedes Abschnitts (A, B, C ...) des Rohrs Anschlußleitungen (11, 12), die jeweils mit einem Verschlußschieber (13, 14) versehen sind, sowie zwischen zwei aufeinanderfolgenden Abschnitten einen Verschlußmechanismus (10) aufweist, der von dem Kabel durchsetzt wird, wobei eine relative Dichtigkeit der verschiedenen Abschnitte realisiert ist, wobei gleichzeitig der Durchgang des Kabels und des Zugmolches (9) zugelassen wird.

7. Vorrichtung nach Anspruch 6, dadurch gekennzeichnet, daß jeder Verschlußmechanismus (10) aus zwei halbzylindrischen Halbschalen (15, 16) gebildet ist, die jeweils einen axialen Durchgang aufweisen, dessen Durchmesser nach dem Nebeneinandersetzen der beiden Schalen im wesentlichen dem Durchmesser des Kabels (3) entspricht, wobei diese Schalen der Kraft zweier querliegender Gegenfedern (17, 18) unterworfen sind, die die Schalen ständig in Kontakt mit dem Kabel bringen, wobei es ihnen gleichzeitig ermöglicht wird, sich beim Durchgang des Molches voneinander zu entfernen.
